# EUROPEAN PATENT APPLICATION

(11) **EP 4 300 651 A1**
(43) Date of publication of application: **03.01.2024**
(21) Application number: 21933661.7
(22) Date of filing: 30.03.2021
(51) Int. Cl.: H01M 10/0568, H01M 10/0565

(54) **ELECTROLYTE AND ELECTROCHEMICAL DEVICE CONTAINING ELECTROLYTE**

(71) Applicant: Ningde Amperex Technology Limited, Ningde, Fujian 352100 (CN)
(72) Inventor: LIU, Jianyu, Ningde, Fujian 352100 (CN); LI, Wenqiang, Ningde, Fujian 352100 (CN); ZHENG, Jianming, Ningde, Fujian 352100 (CN)
(74) Representative: Icosa
(86) International application number: PCT/CN2021/084094
(87) International publication number: WO 2022/204980

(57) **Abstract**

This application relates to an electrolyte and an electrochemical apparatus containing the electrolyte. The electrolyte includes a fluorine-containing sulfonimide lithium salt and a trinitrile compound, where based on a weight of the electrolyte, a percentage of the fluorine-containing sulfonimide lithium salt is X%, and a percentage of the trinitrile compound is Y%, where 1≤X+Y≤6. The electrolyte in this application can significantly improve safety performance of lithium-ion batteries.

## Description

### TECHNICAL FIELD

This application relates to the energy storage field, and specifically, to an electrolyte and an electrochemical apparatus containing such electrolyte.

### BACKGROUND

With popularization and application of smart products, people's demand for mobile phones, notebooks, cameras and other electronic products is increasing year by year. Lithium-ion batteries, as operating power supplies for electronic products, have characteristics such as high energy density, no memory effect, and high operating voltage, and are gradually replacing conventional Ni-Cd and MH-Ni batteries. However, with the development of lithium-ion batteries, people have increasingly high requirements for safety performance of the lithium-ion batteries. Therefore, developing higher-safety lithium-ion batteries has become one of the main demands of the market.

### SUMMARY

A first aspect of this application provides an electrolyte, including a fluorine-containing sulfonimide lithium salt and a trinitrile compound, where based on a weight of the electrolyte, a percentage of the fluorine-containing sulfonimide lithium salt is X%, and a percentage of the trinitrile compound is Y%, where 1≤X+Y≤6. The electrolyte of the present invention can improve safety performance of lithium-ion batteries.

According to some embodiments of the present invention, the electrolyte further includes lithium hexafluorophosphate (LiPF₆). According to some embodiments of this application, based on the weight of the electrolyte, a percentage of the lithium hexafluorophosphate is Z%, where X+Z≤7.5 and X/Z≤1.

According to some embodiments of the present invention, the fluorine-containing sulfonimide lithium salt includes one or two of lithium bisfluorosulfonimide (LiFSI) or lithium bistrifluoromethanesulfonimide (LiTFSI).

According to some embodiments of the present invention, the electrolyte satisfies at least one of the following conditions (a) or (b): (a) Z is less than 5; or (b) 0.8≤(X+Z)/(X+Y)≤3.5.

According to some embodiments of the present invention, the trinitrile compound includes at least one of a compound of formula II or a compound of formula III: 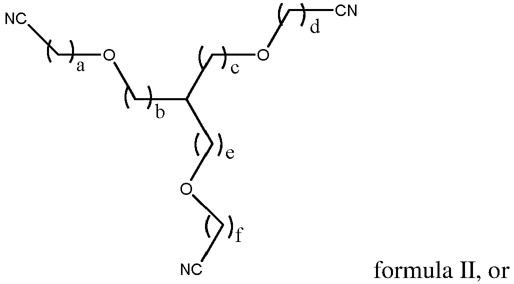 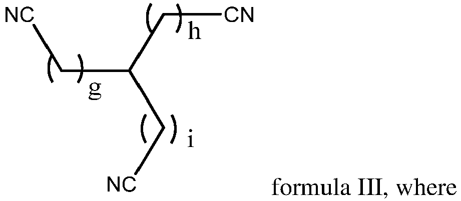
in formula II, a, d, and f are each independently selected from integers of 1 to 6, and b, c, and e are each independently selected from integers of 0 to 6; and
in formula III, g, h, and i are each independently selected from integers of 0 to 6.

According to some embodiments of the present invention, the trinitrile compound includes at least one of 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, or 1,2,5-tris(cyanoethoxy)pentane.

According to some embodiments of the present invention, the electrolyte further includes a compound of formula I: 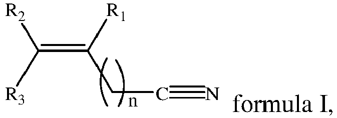 where R₁, R₂, and R₃ are each independently selected from hydrogen, halogen, a C₁-C₁₂ alkyl group with or without a substituent, a C₃-C₈ cycloalkyl group with or without a substituent, and a C₆-C₁₂ aryl group with or without a substituent, where the substituent is selected from at least one of cyano, nitro, halogen, or sulfonyl, and n is an integer ranging from 0 to 7.

According to some embodiments of the present invention, in formula I, R₁, R₂, and R₃ are each independently selected from hydrogen or a C₁-C₅ alkyl group, and n is an integer ranging from 0 to 3.

According to some embodiments of the present invention, based on the weight of the electrolyte, a percentage of the compound of formula I is A%, where 1≤A+X+Y≤7.

According to some embodiments of the present invention, the electrolyte further includes a lithium salt additive, where the lithium salt additive includes at least one of lithium tetrafluoroborate, lithium difluorophosphate, lithium bis(oxalato)borate, or lithium difluoro(oxalato)borate. According to some embodiments of this application, based on the weight of the electrolyte, a percentage of the lithium salt additive is P%, where 0.1≤P≤2.

A second aspect of this application provides an electrochemical apparatus, including a positive electrode plate, a negative electrode plate, a separator, and the electrolyte according to the first aspect of this application.

According to some embodiments of the present invention, the positive electrode plate includes a positive electrode current collector, and the positive electrode current collector includes an aluminum foil substrate and a copper element contained in the aluminum foil substrate, and based on a weight of the positive electrode current collector, an amount m of the copper element is calculated in ppm, and thickness d of the aluminum foil substrate is calculated in µm, where d×m/1000≥5.

According to some embodiments of the present invention, 5≤d×m/1000≤50.

According to some embodiments of the present invention, 0<m≤2000 ppm.

A third aspect of this application provides an electronic device, including the electrochemical apparatus according to the second aspect of this application.

### DESCRIPTION OF EMBODIMENTS

The following further describes this application with reference to embodiments. It should be understood that these specific embodiments are merely intended to illustrate this application but not to limit the scope of this application.

A first aspect of this application provides an electrolyte, including a fluorine-containing sulfonimide lithium salt and a trinitrile compound, where based on a weight of the electrolyte, a percentage of the fluorine-containing sulfonimide lithium salt is X%, and a percentage of the trinitrile compound is Y%, where 1≤X+Y≤6. According to some embodiments, X+Y=1.25, 1.5, 1.75, 2.0, 2.25, 2.5, 2.75, 3.0, 3.25, 3.5, 3.75, 4.0, 4.25, 4.5, 4.75, 5.0, 5.25, 5.5, 5.75, 6.0, or any value between these values.

According to some embodiments of the present invention, 1≤X≤5.5, for example, X is 1.0, 1.25, 1.5, 1.75, 2.0, 2.25, 2.5, 2.75, 3.0, 3.25, 3.5, 3.75, 4.0, 4.25, 4.5, 4.75, 5.0, 5.25, 5.5, or any value between these values. According to some embodiments of the present invention, X satisfies 1.25≤X≤5.0.

According to some embodiments of the present invention, 0.1≤Y≤2.5, for example, Y is 0.1, 0.25, 0.5, 0.75, 1.0, 1.25, 1.5, 2.0, 2.25, or any value between these values. According to some embodiments of the present invention, 0.5≤Y≤2.0.

According to some embodiments of the present invention, the electrolyte further includes lithium hexafluorophosphate (LiPF₆). According to some embodiments of this application, based on the weight of the electrolyte, a percentage of the lithium hexafluorophosphate is Z%, where X+Z≤7.5 and X/Z≤1. The introduction of the fluorine-containing sulfonimide lithium salt can improve stability of the electrolyte itself, and can significantly reduce heat generated by a short circuit when a sum of concentrations of fluorine-containing sulfonimide lithium salt and lithium hexafluorophosphate is low, thereby improving mechanical safety performance upon impact (Impact) and nail (Nail) penetration.

According to some embodiments of the present invention, Z≤7.0. According to some embodiments of the present invention, Z<5.0. According to some embodiments of the present invention, 0.1≤Z≤7, for example, Z is 0.1, 0.5, 1.5, 2.0, 2.5, 3.0, 3.75, 4.0, 4.25, 4.75, 5.0, 6.0, or any value between these values. According to some embodiments of the present invention, 2.5≤Z≤5.0.

According to some embodiments of the present invention, the fluorine-containing sulfonimide lithium salt includes lithium bisfluorosulfonimide (LiFSI) and/or lithium bistrifluoromethanesulfonimide (LiTFSI). In some embodiments, the fluorine-containing sulfonimide lithium salt includes lithium bisfluorosulfonimide (LiFSI) and lithium bistrifluoromethanesulfonimide (LiTFSI).

According to some embodiments of the present invention, the electrolyte satisfies 0.8≤(X+Z)/(X+Y)≤3.5. In some embodiments, (X+Z)/(X+Y) is 1.0, 1.2, 1.4, 1.6, 1.8, 2.0, 2.5, 2.8, 3.0, 3.2, 3.4, 3.5, or any value between these values. According to some embodiments of the present invention, the electrolyte satisfies 1.2≤(X+Z)/(X+Y)≤3.5.

In this application, the trinitrile compound refers to an organic compound having three cyano groups (-CN). According to some embodiments of the present invention, the trinitrile compound includes at least one of a compound of formula II or a compound of formula III: 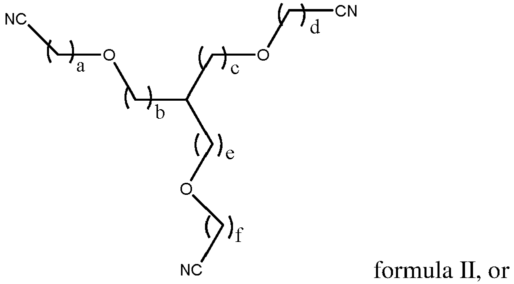 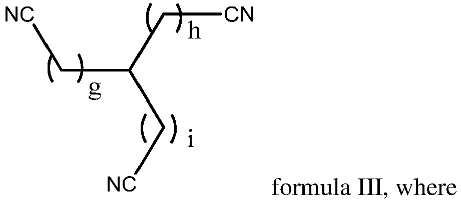
in formula II, a, d, and f are each independently selected from integers of 1 to 6, and b, c, and e are each independently selected from integers of 0 to 6; and
in formula III, g, h, and i are each independently selected from integers of 0 to 6.

According to some embodiments of the present invention, the trinitrile compound includes at least one of 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, or 1,2,5-tris(cyanoethoxy)pentane.

According to some embodiments of the present invention, the electrolyte further includes a compound of formula I: 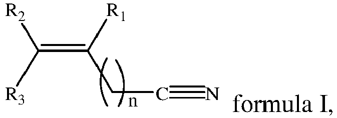 where R₁, R₂, and R₃ are each independently selected from hydrogen, halogen, a C₁-C₁₂ alkyl group with or without a substituent, a C₃-C₈ cycloalkyl group with or without a substituent, and a C₆-C₁₂ aryl group with or without a substituent, where the substituent is selected from at least one of cyano, nitro, halogen, or sulfonyl, and n is an integer ranging from 0 to 7.

According to some embodiments of the present invention, in formula I, R₁, R₂, and R₃ are each independently selected from hydrogen or a C₁-C₅ alkyl group, and n is an integer ranging from 0 to 3. In some embodiments, the compound of formula I is selected from one or more of allyl cyanide or allyl nitrile.

According to some embodiments of the present invention, based on the weight of the electrolyte, a percentage of the compound of formula I is A%, where 1≤A+X+Y≤7.

According to some embodiments of the present invention, the electrolyte further includes a lithium salt additive, where the lithium salt additive includes at least one of lithium tetrafluoroborate (LiBF₄), lithium difluorophosphate (LiPO₂F₂), lithium bis(oxalato)borate (LiBOB), or lithium difluoro(oxalato)borate (LiDFOB). According to some embodiments of this application, based on the weight of the electrolyte, a percentage of the lithium salt additive is P%, where 0.1≤P≤2.

A second aspect of this application provides an electrochemical apparatus, including a positive electrode plate, a negative electrode plate, a separator, and the electrolyte according to the first aspect of this application.

According to some embodiments of the present invention, the positive electrode plate includes a positive electrode current collector, and the positive electrode current collector includes an aluminum foil substrate and a copper element contained in the aluminum foil substrate, and based on a weight of the positive electrode current collector, an amount m of the copper element is calculated in ppm, and thickness d of the aluminum foil substrate is calculated in µm, where d×m/1000≥5.

According to some embodiments of the present invention, 5≤d×m/1000≤50.

According to some embodiments of the present invention, 0<m≤2000 ppm.

In the electrochemical apparatus according to this application, a positive electrode further includes a positive electrode active material disposed on the positive electrode current collector. The positive electrode active material is not limited to a specific type, and may be selected according to requirements.

The positive electrode active material may be selected from one or more of a lithium cobalt oxide (LiCoO₂), a lithium-nickel-cobalt-manganese ternary material, a lithium manganate oxide (LiMn₂O₄), a lithium nickel manganese oxide (LiNi_{0.5}Mn_{1.5}O₄), lithium iron phosphate (LiFePO₄), or its doping and/or coating modification compounds. However, this application is not limited to these materials and may also use other conventionally known materials that can be used as positive electrode active materials. One type of these positive electrode active materials may be used alone, or two or more types may be used in combination.

In some embodiments, the positive electrode active material has a coating layer on it. The coating layer can isolate the electrolyte, which can largely reduce a side reaction between the electrolyte and the positive electrode active material and reduce leaching of a transition metal, thereby improving electrochemical stability of the positive electrode active material. The coating layer may be a carbon layer, a graphene layer, an oxide layer, an inorganic salt layer, or a conductive polymer layer. The oxide may be an oxide formed by one or more elements of Al, Ti, Mn, Zr, Mg, Zn, Ba, Mo, and B; the inorganic salt can be one or more of Li₂ZrO₃, LiNbO₃, Li₄Ti₅O₁₂, Li₂TiO₃, Li₃VO₄, LiSnO₃, Li₂SiO₃, and LiAlO₂; and the conductive polymer may be polypyrrole (PPy), poly 3,4-ethylenedioxythiophene (PEDOT) or polyamide (PI).

A negative electrode of the electrochemical apparatus according to this application includes a current collector and a negative electrode active material layer formed on the current collector, where the negative electrode active material layer includes a negative electrode active material, and the negative electrode active material may include a material that reversibly intercalates or deintercalates a lithium ion, lithium metal, a lithium metal alloy, a material capable of doping or dedoping lithium, or a transition metal oxide, for example, Si, SiOₓ (0<x<2) and other materials. The material that reversibly intercalates and deintercalates a lithium ion may be a carbon material. The carbon material may be any carbon-based negative electrode active material commonly used in a lithium-ion rechargeable electrochemical apparatus. Examples of the carbon material include crystalline carbon, amorphous carbon, and combinations thereof. The crystalline carbon may be amorphous or plate-shaped, flake-shaped, spherical or fiber-shaped natural graphite or artificial graphite. The amorphous carbon may be soft carbon, hard carbon, a mesophase pitch carbonization product, burnt coke, or the like. Both low crystalline carbon and high crystalline carbon can be used as the carbon material. The low crystalline carbon material may generally include soft carbon and hard carbon. The high crystalline carbon material may generally include natural graphite, crystalline graphite, pyrolytic carbon, a mesophase pitch-based carbon fiber, mesophase carbon microbeads, mesophase pitch, and high-temperature calcined carbon (such as petroleum or coke derived from coal tar pitch).

According to some embodiments, the negative electrode active material layer includes a binder, and the binder may include various binder polymers, for example, polyvinylidene fluoride-hexafluoropropylene copolymer (PVDF-co-HFP), polyvinylidene fluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylic styrene-butadiene rubber, epoxy resin, and nylon, but is not limited thereto.

According to some embodiments, the negative electrode active material layer further includes a conductive material to improve electrode conductivity. Any conductive material that causes no chemical change can be used as the conductive material. Examples of the conductive material include: a carbon-based material such as natural graphite, artificial graphite, carbon black, acetylene black, Ketjen black, and carbon fiber; a metal-based material such as metal powder or metal fiber including copper, nickel, aluminum, and silver; a conductive polymer such as a polyphenylene derivative; or any mixture thereof. The current collector may be copper foil, nickel foil, stainless steel foil, titanium foil, nickel foam, copper foam, a polymer substrate coated with a conductive metal, or a combination thereof.

The separator used in the electrochemical apparatus according to this application is not particularly limited to any material or shape, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, membrane, or composite membrane having a porous structure, and a material of the substrate layer is selected from at least one of polyethylene, polypropylene, polyethylene terephthalate, or polyimide. Specifically, a polypropylene porous membrane, a polyethylene porous membrane, polypropylene nonwoven fabric, polyethylene nonwoven fabric, or polypropylene-polyethylene-polypropylene porous composite membrane can be selected.

A surface treatment layer is provided on at least one surface of the substrate layer, and the surface treatment layer may be a polymer layer or an inorganic layer, or may be a layer formed by a mixed polymer and an inorganic substance.

The inorganic substance layer includes inorganic particles and the binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of a polyvinylidene fluoride, a vinylidene fluoride-hexafluoropropylene copolymer, a polyamide, a polyacrylonitrile, a polyacrylate, a polyacrylic acid, a polyacrylate, a polyvinylpyrrolidone, a polyvinyl ether, a polymethyl methacrylate, a polytetrafluoroethylene, or a polyhexafluoropropylene.

The polymer layer includes a polymer, and a material of the polymer is selected from at least one of a polyamide, a polyacrylonitrile, an acrylate polymer, a polyacrylic acid, a polyacrylate, a polyvinylpyrrolidone, a polyvinyl ether, a polyvinylidene fluoride, or a poly(vinylidene fluoride-hexafluoropropylene).

An electronic device or apparatus to which the electrochemical apparatus of this application can be applied is not particularly limited. In some embodiments, the electronic device includes, but is not limited to: notebook computers, pen-input computers, mobile computers, e-book players, portable phones, portable fax machines, portable copiers, portable printers, head-mounted stereo headsets, video recorders, liquid crystal display televisions, portable cleaners, portable CD players, mini discs, transceivers, electronic notebooks, calculators, memory cards, portable recorders, radios, backup power supplies, motors, automobiles, motorcycles, assisted bicycles, bicycles, lighting apparatuses, toys, game consoles, clocks, electric tools, flashlights, cameras, large household storage batteries or lithium-ion capacitors.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or single numerical value, as a lower limit or an upper limit, may be combined with any other point or single numerical value or combined with another lower limit or upper limit to form an unspecified range.

A list of items preceded by the terms such as "at least one of", "at least one type of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single constituent or a plurality of constituents. The item B may contain a single constituent or a plurality of constituents. The item C may contain a single constituent or a plurality of constituents.

The term "hydrocarbon group" covers an alkyl group, an alkenyl group, and an alkynyl group.

The term "alkyl group" is intended to be a straight-chain saturated hydrocarbon structure having 1 to 20 carbon atoms. The term "alkyl group" is also intended to be a branched or cyclic hydrocarbon structure having 3 to 20 carbon atoms. References to an alkyl group with a specific carbon number are intended to cover all geometric isomers with the specific carbon number. Therefore, for example, "butyl" is meant to include n-butyl, sec-butyl, isobutyl, tert-butyl, and cyclobutyl; and "propyl" includes n-propyl, isopropyl, and cyclopropyl. Examples of the alkyl group include, but are not limited to, a methyl group, an ethyl group, an n-propyl group, an isopropyl group, an cyclopropyl group, an n-butyl group, an isobutyl group, a sec-butyl group, a tert-butyl group, a cyclobutyl group, an n-pentyl group, an isopentyl group, a neopentyl group, a cyclopentyl group, a methylcyclopentyl group, an ethylcyclopentyl group, an n-hexyl group, an isohexyl group, a cyclohexyl group, an n-heptyl group, an octyl group, a cyclopropyl group, a cyclobutyl group, a norbornyl group, and the like.

The term "alkenyl group" refers to a straight-chain or branched monovalent unsaturated hydrocarbon group having at least one and usually 1, 2, or 3 carbon-carbon double bonds. Unless otherwise defined, the alkenyl group generally contains 2 to 20 carbon atoms and includes, for example, a C₂-C₄ alkenyl group, a C₂-C₆ alkenyl group, and a C₂-C₁₀ alkenyl group. Representative alkenyl groups include, for example, vinyl, n-propenyl, isopropenyl, n-but-2-enyl, but-3-enyl, and n-hex-3-enyl.

The term "alkynyl group" refers to a straight-chain or branched monovalent unsaturated hydrocarbon group having at least one and usually 1, 2, or 3 carbon-carbon triple bonds. Unless otherwise defined, the alkynyl group generally contains 2 to 20 carbon atoms and includes, for example, a C₂-C₄ alkynyl group, a C₃-C₆ alkynyl group, and a C₃-C₁₀ alkynyl group. Representative alkynyl groups include, for example, ethynyl, prop-2-ynyl (n-propynyl), n-but-2-ynyl and n-hex-3-ynyl.

As used herein, a component content is a percentage based on the weight of the electrolyte.

### 1. Preparation of a battery

Lithium-ion batteries in examples and comparative examples are all prepared according to the following method.

### (1) Preparation of an electrolyte

In a glove box under argon atmosphere with a water content less than 10 ppm, ethylene carbonate (EC), propylene carbonate (PC), and diethyl carbonate (DEC) were mixed evenly at a weight ratio of 1:1:1, and each component was added with reference to Table 1-5 and stirred evenly to form an electrolyte.

### (2) Preparation of a positive electrode plate

Lithium cobalt oxide (LiCoO₂) as a positive electrode active material, carbon nanotube (CNT) as a conductive agent, and polyvinylidene fluoride as a specific binder were mixed at a weight ratio of 95:2:3. N-methylpyrrolidone (NMP) was added. Then the mixture was stirred by a vacuum mixer to obtain a uniform positive electrode slurry. The positive electrode slurry was applied uniformly on an aluminum foil of a positive electrode current collector. Then the aluminum foil was dried at 85°C, followed by cold pressing, cutting, and slitting. A resulting material was dried under vacuum at 85°C for 4 hours to obtain a positive electrode plate.

### (3) Preparation of a negative electrode plate

Graphite as a negative active material, styrene-butadiene rubber (SBR) as a binder, and sodium carboxymethyl cellulose (CMC) as a thickener were fully stirred and mixed in an appropriate amount of deionized water solvent at a weight ratio of 95:2:3 to form a uniform negative electrode slurry; and the slurry was applied onto a copper foil of a negative electrode current collector, followed by drying and cold pressing, to obtain a negative electrode plate.

### (4) Preparation of a separator

A polyethylene (PE) separator with a thickness of 5 µm was selected as the separator.

### (5) Preparation of a lithium-ion battery

A positive electrode plate, a separator, and a negative electrode plate were laminated in order, so that the separator was located between the positive electrode plate and the negative electrode plate for isolation; then they were wound and placed in an outer packaging foil; and the prepared electrolyte was injected into a dried battery, followed by processes such as vacuum packaging, standing, chemical conversion, and shaping, to complete the preparation of a lithium-ion battery.

### 2. Test method

### (1) Nail penetration test

Ten to-be-tested electrochemical apparatuses (lithium-ion batteries) were taken and charged at a constant current rate of 0.5C to a voltage of 4.45V at room temperature, and then charged at a constant voltage of 4.45V to a current of 0.05C to make them in a fully charged state of 4.45V. After that, the nail penetration test was performed on the lithium-ion batteries at room temperature using nails with a diameter of 2.5 mm (steel nails, made of carbon steel with a taper of 16.5 mm and a total length of 100 mm) and at a speed of 30 mm/s. The taper of steel nails needs to pass through the lithium-ion batteries. Whether the lithium-ion batteries produced smoke, fire or explosion was observed. If not, the lithium-ion batteries were considered to have passed the nail penetration test. Each group of 10 batteries was tested, and the number of batteries that passed the test was recorded.

### (2) Method for testing a room temperature capacity retention rate of the lithium-ion battery

At 25°C, the lithium-ion battery was charged at a constant current of 0.5C to 4.45V, then charged at a constant voltage of 4.45V to a current of 0.05C, and then discharged to 3.0V at a constant current of 0.5C. This was the first cycle. The foregoing steps for the lithium-ion battery were cycled many times under the foregoing conditions. The first discharge capacity was taken as 100%. The charge and discharge cycle was repeated until the discharge capacity decayed to 80% and the number of cycles was recorded as an indicator to evaluate the cycle performance of the lithium-ion battery.

### (3) Hot box test

At 25°C, the lithium-ion battery was charged to 4.5V at a constant current of 0.7C, and charged at a constant voltage of 4.5V to a current of 0.05C. The battery was placed in a high temperature box, heated to 135°C with a temperature rise rate of 5±2°C/min, and then kept for 1 hour, and the changes of the battery voltage, temperature, and the hot box temperature were recorded. The battery passed the test if there was no fire, explosion, or smoke. Each group of 10 batteries was tested, and the number of batteries that passed the test was recorded.

### 3. Test result

### (1) Impact of a fluorine-containing sulfonimide lithium salt and a trinitrile compound on battery performance.

**Table 1**

| Sample | Percentage of fluorine-containing sulfonimide lithium salt, X (%) | | Percentage of trinitrile compound Y (%) | X+Y | Nail penetration rate | Cycles at 25°C (80%) |
|---|---|---|---|---|---|---|
| | LiFSI | LiTFSI | 1,3,6-hexanetricarbonitrile | | | |
| D1-1 | 10 | 0 | - | 10 | 1/10 pass | 398 |
| D1-2 | 0 | 10 | - | 10 | 1/10 pass | 402 |
| D1-3 | 2.5 | 0 | - | 2.5 | 6/10 pass | 350 |
| D1-4 | 0 | 2.5 | - | 2.5 | 7/10 pass | 352 |
| D1-5 | 1.25 | 1.25 | - | 2.5 | 7/10 pass | 355 |
| D1-6 | 2.5 | 2.5 | - | 5 | 6/10 pass | 377 |
| S1-1 | 1.25 | 0 | 0.5 | 1.75 | 9/10 pass | 424 |
| S1-2 | 0 | 1.25 | 0.5 | 1.75 | 9/10 pass | 425 |
| S1-3 | 1.25 | 1.25 | 0.5 | 3 | 9/10 pass | 434 |
| S1-4 | 1.25 | 1.25 | 1 | 3.5 | 10/10 pass | 439 |
| S1-5 | 1.25 | 1.25 | 2 | 4.5 | 10/10 pass | 442 |
| S1-6 | 2.5 | 2.5 | 0.5 | 5.5 | 9/10 pass | 448 |
| S1-7 | 2.5 | 2.5 | 1 | 6 | 10/10 pass | 454 |
| S1-8 | 3 | 3 | 0.5 | 6.5 | 8/10 pass | 456 |

It can be seen from Table 1 that within a specific range, the percentage of fluorine-containing sulfonimide lithium salt was decreased, and the nail penetration rate of the battery was gradually increased. In other words, the safety performance of the battery was constantly improved, but cycle performance of the battery was obviously affected. With the introduction of the trinitrile compound (taking 1,3,6-hexanetricarbonitrile as an example herein), the nail penetration rate has increased significantly, mainly attributed to an enhanced interfacial stability of the positive electrode by the trinitrile compound and a synergistic effect with the fluorine-containing sulfonimide lithium salt, which together improved stability of the electrolyte, thereby significantly improving the safety performance of the battery while improving the cycle performance of the battery. When a sum of the contents of the fluorine-containing sulfonimide lithium salt and the trinitrile compound increased, the system could produce more heat in the nail penetration test, making the battery prone to failure, and increasing the cost of the electrolyte. Therefore, the sum of the two contents must be maintained within a reasonable range.

### (2) Impact of fluorine-containing sulfonimide lithium salt + trinitrile compound + LiPF₆ on battery performance.

**Table 2-1**

| Sample | Percentage of LiPF₆ Z (%) | Percentage of fluorine-containing sulfonimide lithium salt X (%) | | Percentage of trinitrile compound Y (%) | X+Z | (X+Z)/(X+Y) | Nail penetration rate | Cycles at 25°C (80%) |
|---|---|---|---|---|---|---|---|---|
| | | LiFSI | LiTFSI | 1,3,6-hexanetricarbonitrile | | | | |
| D2-1 | 10 | 0 | 0 | 0 | 10 | - | 0/10 pass | 448 |
| D2-2 | 2.5 | 0 | 0 | 0 | 2.5 | - | 6/10 pass | 350 |
| D2-3 | 5 | 0 | 0 | 0 | 5 | - | 5110 pass | 397 |
| S1-3 | 0 | 1.25 | 1.25 | 0.5 | 2.5 | - | 9/10 pass | 434 |
| S2-1 | 2.5 | 1.25 | 0 | 0.5 | 3.75 | 2.14 | 9/10 pass | 440 |
| S2-2 | 2.5 | 0 | 1.25 | 0.5 | 3.75 | 2.14 | 9/10 pass | 443 |
| S2-3 | 2.5 | 1.25 | 1.25 | 0.5 | 5 | 1.67 | 10/10 pass | 461 |
| S2-4 | 3.75 | 1.25 | 1.25 | 0.5 | 6.25 | 2.08 | 10/10 pass | 492 |
| S2-5 | 4 | 1.5 | 1.5 | 0.5 | 7 | 2.00 | 10/10 pass | 508 |
| S2-6 | 4 | 2 | 2 | 0.5 | 8 | 1.78 | 7/10 pass | 506 |
| S2-7 | 7.5 | 1.25 | 1.25 | 0.5 | 10 | 3.33 | 2/10 pass | 548 |
| S2-8 | 3.5 | 1.5 | 2 | 0.5 | 7 | 1.75 | 10/10 pass | 503 |
| S2-9 | 2.5 | 2 | 2.5 | 0.5 | 7 | 1.40 | 10/10 pass | 482 |

It can be seen from the comparison of Examples S2-1 to S2-9 with Comparative Examples D2-1 to D2-3, and Examples S1-3 and S1-4 that LiPF₆, the fluorine-containing sulfonimide lithium salt and the trinitrile compound were used together within a specific concentration range. Under the condition that a total amount of LiPF₆ and fluorine-containing sulfonimide lithium salt in the electrolyte was low, the use of a plurality of lithium salts was more effective than a single lithium salt system in improving nail penetration, and can also reduce the cost of some raw materials and bring obvious economic benefits. When a total amount of LiPF₆ and fluorine-containing sulfonimide lithium salt was within a specific range, the system generated less heat, and the synergistic effect of LiPF₆, fluorine-containing sulfonimide lithium salt, and trinitrile compound stabilized the electrode interface and reduced the release of oxygen from the positive electrode, thereby achieving a balance for the improvement of safety performance and cycle performance of the battery.

It can be seen from Examples S2-5 to S2-8 and Example S2-9 that when a content ratio of LiPF₆ to the fluorine-containing sulfonimide salt X/Z was less than or equal to 1, the battery maintained relatively stable cycle performance; when X/Z was greater than 1, the cycle performance was affected, which was presumably related to LiPF₆ inhibiting corrosion of an aluminum foil by fluorine-containing sulfonimide salt.

**Table 2-2**

| Sampl e | Percentag e of LiPF₆ Z (%) | Percentage of fluorine-containin g sulfonimide lithium salt X (%) | | Percentage of trinitrile compound Y (%) | X+ Z | Pass rate of hot-bo x test |
|---|---|---|---|---|---|---|
| | | LiFSI | LiTFSI | 1,3,6-hexanetricarbonitril e | | |
| S2-4 | 3.75 | 1.25 | 1.25 | 0.5 | 6.25 | 10/10 pass |
| S2-10 | 4.75 | 1.25 | 1.25 | 0.5 | 7.25 | 10/10 pass |
| S2-11 | 5.5 | 1 | 1 | 0.5 | 7.5 | 8/10 pass |
| S2-12 | 6 | 0.75 | 0.75 | 0.5 | 7.5 | 7/10 pass |
| S2-13 | 6.5 | 0.5 | 0.5 | 0.5 | 7.5 | 5110 pass |

It can be seen from Table 2-2 that when a concentration of LiPF₆ exceeded a specific range, the heat box pass rate of the battery gradually decreased with the increase of the amount of LiPF₆. This may be because thermal decomposition products of LiPF₆ initiated further reactions in the electrolyte system, and heat generation increased, which in turn affected the safety performance of the battery.

### (3) Impact of fluorine-containing sulfonimide lithium salt + trinitrile compound + double bond-containing mononitrile + LiPF₆ on battery performance

**Table 3**

| Sample | Percentage of LiPF₆ Z (%) | Percentage of fluorine-containing sulfonimide lithium salt X (%) | | Percentage of double bond-containing mononitrile A (%) | Percentage of trinitrile compound Y (%) | A+X+Y | Nail penetration rate | Cycles at 25°C (80%) |
|---|---|---|---|---|---|---|---|---|
| | | LiFSI | LiTFSI | Allyl cyanide | 1,3,6-hexanetricarbonitrile | | | |
| S1-3 | - | 1.25 | 1.25 | - | 0.5 | - | 9/10 pass | 435 |
| S1-6 | - | 2.5 | 2.5 | - | 0.5 | - | 9/10 pass | 448 |
| S3-1 | - | 1.25 | 1.25 | 0.3 | 0.5 | 3.3 | 10/10 pass | 440 |
| S3-2 | - | 1.25 | 1.25 | 0.5 | 0.5 | 3.5 | 10/10 pass | 451 |
| S3-3 | - | 2.5 | 2.5 | 0.5 | 0.5 | 6.0 | 10/10 pass | 502 |
| S3-4 | - | 2.5 | 2.5 | 0.5 | 1.5 | 7.0 | 10/10 pass | 509 |
| S3-5 | 4.5 | 1.25 | 1.25 | - | 0.5 | - | 10/10 pass | 498 |
| S3-6 | 4.5 | 1.25 | 1.25 | 0.3 | 0.5 | 3.3 | 10/10 pass | 516 |
| S3-7 | 4.5 | 1.25 | 1.25 | 0.3 | 1 | 3.8 | 10/10 pass | 530 |
| S3-8 | 4.5 | 1.25 | 1.25 | 0.3 | 1.5 | 4.3 | 10/10 pass | 542 |
| S3-9 | 4.5 | 1.25 | 1.25 | 0.5 | 1 | 4.0 | 10/10 pass | 541 |
| S3-10 | 4.5 | 1.25 | 1.25 | 0.5 | 1.5 | 4.5 | 10/10 pass | 545 |
| S3-11 | 10 | 1.25 | 1.25 | - | 0.5 | - | 1/10 pass | 540 |
| D3-1 | 10 | 1.25 | 1.25 | 0.3 | 0.5 | 3.3 | 2/10 pass | 541 |
| D3-2 | 10 | 1.25 | 1.25 | 0.5 | 0.5 | 3.5 | 4/10 pass | 541 |

It can be seen from Table 3 that with further introduction of double bond-containing mononitrile (taking allyl cyanide as an example herein), cycle performance of a hybrid lithium salt system battery has been significantly improved, which was mainly attributed to significantly enhanced interface stability between an electrode plate and the electrolyte. The trinitrile additive mainly acted on a positive electrode interface, and the double bond-containing mononitrile with low oxidation potential and relatively high reduction potential could form a protective film on an electrode interface, to enhance stability of a negative interface while protecting the positive electrode plate, thereby significantly improving the cycle performance of the battery.

It can be seen from comparison of Examples S3-10 with Comparative Examples D3-1 and D3-2 that under the electrolyte system in this application, different from the previous examples that the introduction of the double-bonded mononitrile-containing mononitrile significantly improved the cycle performance of the system, and when X+Y was relatively large, the effect of double bond-containing mononitrile on the cycle performance of the system was not obvious.

### (4) Impact of fluorine-containing sulfonimide lithium salt + trinitrile compound + lithium salt additive on battery performance

**Table 4**

| Sample | Percentage of LiPF₆ Z (%) | Percentage of fluorine-containing sulfonimide lithium salt X (%) | | Percentage of trinitrile compound Y (%) | Percentage of lithium salt additive P (%) | | | Nail penetration rate | Cycles at 25°C (80%) |
|---|---|---|---|---|---|---|---|---|---|
| | | LiFSI | LiTFSI | 1,3,6-hexanetricarbonitrile | LiBOB | LiDFOB | P | | |
| S4-1 | 4.5 | 1.25 | 1.25 | 1 | - | - | - | 10/10 pass | 512 |
| S4-2 | 4.5 | 1.25 | 1.25 | 1 | 0.3 | 0 | 0.3 | 10/10 pass | 587 |
| S4-3 | 4.5 | 1.25 | 1.25 | 1 | 0 | 0.3 | 0.3 | 10/10 pass | 579 |
| S4-4 | 4.5 | 1.25 | 1.25 | 1 | 0.3 | 0.3 | 0.6 | 10/10 pass | 605 |

It can be seen from Table 4 that the addition of other lithium salts such as LiBOB or LiDFOB also significantly improved cycling stability of a multi-salt low dosage system. This was mainly attributed to good stability of the lithium salt additive to the positive electrode, reducing the leaching of transition metals. The synergistic effect of various lithium salts and additives improved stability of the positive electrode structure and also reduced damage to the negative electrode SEI by the transition metal, thereby improving cycle performance while ensuring safety performance of the battery.

### (5) Impact of an aluminum foil on battery performance

The only difference between S5-1 to S5-3 and S4-1 lay in the aluminum foil of the positive electrode current collector. See Table 5 for details.

**Table 5**

| Sample | Percentage of LiPF₆ Z (%) | Percentage of fluorine-containing sulfonimide lithium salt X (%) | | | X+Z | Thickness of aluminum foil | Copper contained in aluminum foil | d×m/1000 | Nail penetration rate |
|---|---|---|---|---|---|---|---|---|---|
| | | LiFSI | LiTFSI | | | d (µm) | m (ppm) | | |
| S4-1 | 4.5 | 1.25 | 1.25 | 7.0 | | 10 | 500 | 5 | 10/10 |
| S5-1 | 4.5 | 1.25 | 1.25 | 7.0 | | 8 | 500 | 4 | 7/10 |
| S5-2 | 4.5 | 1.25 | 1.25 | 7.0 | | 8 | 2000 | 16 | 10/10 |
| S5-3 | 4.5 | 1.25 | 1.25 | 7.0 | | 6 | 500 | 3 | 5110 |

It can be seen from Table 5 that a pass rate of a nail penetration test was significantly reduced by decreasing the thickness of an aluminum foil substrate. However, the pass rate of the nail penetration test could be further improved by increasing the amount of the copper element contained in the aluminum foil substrate. Through comparison with the data of S5-3, it can be seen that the battery had better safety performance when the thickness of a substrate and a copper content satisfied d×m/1000≥5. If d×m/1000 was less than 5, the safety performance of the battery obviously decreased.

## Claims

1. An electrolyte, comprising a fluorine-containing sulfonimide lithium salt and a trinitrile compound, wherein based on a weight of the electrolyte, a percentage of the fluorine-containing sulfonimide lithium salt is X%, and a percentage of the trinitrile compound is Y%, wherein 1≤X+Y≤6.

2. The electrolyte according to claim 1, further comprising lithium hexafluorophosphate, wherein based on the weight of the electrolyte, a percentage of lithium hexafluorophosphate is Z%, wherein X+Z≤7.5 and X/Z≤1.

3. The electrolyte according to claim 2, wherein at least one of the following conditions (a) or (b) is satisfied: (a) Z is less than 5; or (b) 0.8≤(X+Z)/(X+Y)≤3.5.

4. The electrolyte according to claim 1, wherein the fluorine-containing sulfonimide lithium salt comprises lithium bisfluorosulfonimide and/or lithium bistrifluoromethanesulfonimide.

5. The electrolyte according to claim 1, wherein the trinitrile compound comprises at least one of a compound of formula II or a compound of formula III: 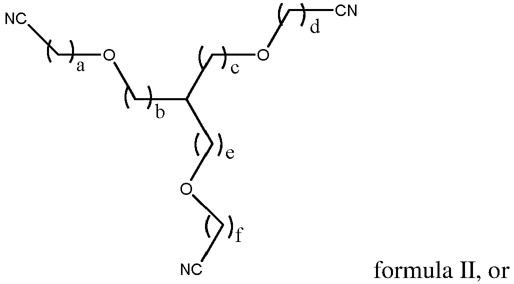 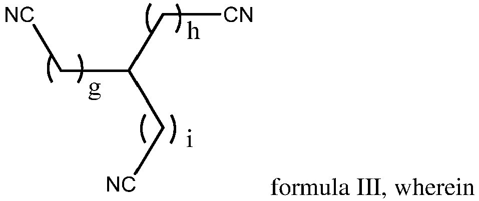
in formula II, a, d, and f are each independently selected from integers of 1 to 6, and b, c, and e are each independently selected from integers of 0 to 6; and
in formula III, g, h, and i are each independently selected from integers of 0 to 6.

6. The electrolyte according to claim 1, wherein the trinitrile compound comprises at least one of 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, or 1,2,5-tris(cyanoethoxy)pentane.

7. The electrolyte according to claim 1, further comprising a compound of formula I: 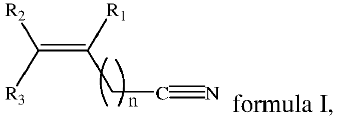
wherein R₁, R₂, and R₃ are each independently selected from hydrogen, halogen, a C₁-C₁₂ alkyl group with or without a substituent, a C₃-C₈ cycloalkyl group with or without a substituent, and a C₆-C₁₂ aryl group with or without a substituent, wherein the substituent is selected from at least one of cyano, nitro, halogen, or sulfonyl, and n is an integer ranging from 0 to 7; and
wherein based on the weight of the electrolyte, a percentage of the compound of formula I is A%, wherein 1≤A+X+Y≤7.

8. The electrolyte according to claim 1, further comprising a lithium salt additive, wherein the lithium salt additive comprises at least one of lithium tetrafluoroborate, lithium difluorophosphate, lithium bis(oxalato)borate, or lithium difluoro(oxalato)borate; and
wherein based on the weight of the electrolyte, a percentage of the lithium salt additive is P%, wherein 0.1≤P≤2.

9. An electrochemical apparatus, comprising a positive electrode plate, a negative electrode plate, a separator, and the electrolyte according to any one of claims 1 to 8.

10. The electrochemical apparatus according to claim 9, wherein the positive electrode plate comprises a positive electrode current collector, and the positive electrode current collector comprises an aluminum foil substrate and a copper element contained in the aluminum foil substrate, and based on a weight of the positive electrode current collector, an amount m of the copper element is calculated in ppm, and thickness d of the aluminum foil substrate is calculated in µm, wherein d×m/1000≥5.
